Europäisches Patentamt

European Patent Office

Office européen des brevets

(11) Publication number: **0 426 085 A1**

# EUROPEAN PATENT APPLICATION

(21) Application number: **90120736.5**

(22) Date of filing: **29.10.90**

(51) Int. Cl.⁵: **C09D 101/10**, C09D 101/18, C09D 4/06

(30) Priority: **30.10.89 US 428719**

(43) Date of publication of application:
**08.05.91 Bulletin 91/19**

(84) Designated Contracting States:
**DE FR GB IT**

(71) Applicant: **AQUALON COMPANY**
**2711 Centerville Road Little Falls Centre One**
**Wilmington Delaware 19850-5417(US)**

(72) Inventor: **Brown, Richard G.**
**3908-A Sussex Drive, Lancaster Court Apts.**
**Wilmington, Delaware 19805(US)**
Inventor: **Patnaik, Birendra K.**
**1135 Dorset Drive**
**West Chester, Pennsylvania 19382(US)**

(74) Representative: **Lederer, Franz, Dr. et al**
**Lederer, Keller & Riederer, Patentanwälte,**
**Lucile-Grahn-Strasse 22**
**W-8000 München 80(DE)**

(54) Radiation-curable blend of a cellulose ester and a multifunctional (meth)acrylate.

(57) A coating composition for protecting wood and other surfaces comprises a radiation-curable blend of (1) 30%-70% of a cellulose ester, (2) 70%-30% of at least one acrylic or methacrylic ester having more than two (meth)acrylate groups, and (3) 0.1%-10% of a photoinitiator, all percentages being based on the weight of solids. In coatings particularly suited for application over oleophilic color coats for wood, the (meth)acrylic ester having more than two (meth)acrylate groups is a polyurethane (meth)acrylate substituted by alkyl groups having at least 8 carbon atoms.

EP 0 426 085 A1

# RADIATION-CURABLE BLEND OF A CELLULOSE ESTER AND A MULTIFUNCTIONAL (METH)ACRYLATE

This invention relates to radiation-curable coating compositions for protecting wood and other substrates.

Lacquer type coatings on wood substrates such as furniture and paneling are well known. Typically, these coatings are based on nitrocellulose in combination with other components that provide suitable performance characteristics. A lacquer type coating is generally applied from a solution and hardens as the solvent evaporates and the dissolved resins are deposited on the substrate. Such coatings are then sanded, rubbed, and polished to yield high gloss surfaces that are also easy to repair. However, the coatings have several major shortcomings. They are susceptible to water spotting and are attacked by many chemicals such as nail polish remover. They are also easily marred and scratched.

The prior art teaches the use of reactive type coatings as one solution to the problems connected with nitrocellulose coatings. Such reactive coating compositions contain compounds with one or more reactive functionalities that can lead to a chain extended or cross-linked material. Radiation-curable reactive type coatings are preferred, since it takes only a few minutes or seconds to attain the desired final properties. The coatings are generally based on ethylenically unsaturated polyesters, acrylates, or urethane acrylates. Often, the compositions are blends and include a radiation-curable, ethylenically unsaturated thermoplastic resin, particularly when physical workability of the uncured coatings is desired. The thermoplastic resin can belong to any of the well-known categories, but cellulose esters are preferred. For example, U.S. Patent 4,656,202 teaches the use of a blend of (a) an acrylated cellulosic compound, prepared by reacting an isocyanate acrylate with a hydroxyl-containing cellulose acetate carboxylate, (b) an acrylated oligomer and (c) an ultraviolet photoinitiator as the coating composition. U. S. 4,066,582 discloses a radiation-curable coating composition for porous substrates such as paper or paperboard comprising a blend of an oligomeric polyacrylate or polymethacrylate, a photoinitiator and 0.25 to 9 wt. % nitrocellulose. U.S. 4,308,119 discloses an abrasion-resistant optical coating composition containing a pentaerythritol-based polyacrylate, a cellulose ester and a photoinitiator. The ratio of polyacrylate to cellulose ester is from 6 to 1 to 100 to 1.

Thus, to attain physical workability of the uncured coating and improved solvent and abrasion resistance of the cured coating, the prior art teaches that the thermoplastic resin should contain ethylenically unsaturated functionality. However, such prior art coating compositions have many shortcomings. In functionalizing the thermoplastic resins with ethylenic unsaturation, the resins become darker colored. Sometimes such modification also results in inferior physical workability of the uncured coating. As a result, the combination of good workability of the uncured coating and excellent solvent resistance for the cured coating is not attained. Most of the coatings lack a rich lacquer finish and are not appealing to the customer. Also, many such reactive coating compositions lack the early repairability typically observed with the lacquer coatings.

Radiation-curable reactive coatings can be used to protect kitchen cabinets and low cost furniture as well as fine furniture. Unlike low cost furniture and kitchen cabinets, which normally require only a sealer, a single color coat and a topcoat, fine wood furniture is typically coated with a series of alternating clear coats and color coats such as stains, fillers and glazes. The clear coats contain the oleophobic, multifunctional, high surface tension resins described above, as well as other resins, diluents, and a solvent. The color coats contain pigments dispersed in oleophilic, non-polar, low surface tension materials such as long oil alkyds, linseed oil and castor oil. This layering of high surface tension resins (the radiation-curable clear coats) with low surface tension resins and oils (the vehicles in the color coats), often results in loss of adhesion which may manifest itself in a variety of coating aberrations such as "greying" or "whitening" of the coating during temperature cycling experiments and poor solvent resistance (lifting of the coating when exposed to solvents). Not only is a loss in adhesion of the coating to the wood substrate common, but a loss in adhesion of one layer of a coating to a subsequently applied layer commonly occurs.

Thus furniture finishers using cellulose-based, UV-curable compositions that are known to be "oil-incompatible" must choose from a limited number of specific color coats. An oil-compatible resin system would make it unnecessary to have on hand a set of wood finish undercoat materials specifically designed for use with UV-curable topcoats.

The acrylate or methacrylate-based radiation-curable coating composition of this invention contains a photoinitiator and is characterized in that it comprises a blend of (1) 30 to 70% of a cellulose ester, (2) 70% to 30% of at least one acrylic or methacrylic ester having more than two (meth)acrylate groups, and (3) 0.1% to 10% of a photoinitiator, all percentages being based on the weight of solids. Also according to the invention, in compositions particularly suited for application over oleophilic color coats in a wood furniture finishing schedule, the acrylic or methacrylic ester having more than two (meth)acrylate groups is an "oil-compatible" polyurethane (meth)acrylate substituted by alkyl groups having at least 8 carbon atoms.

Unlike prior art radiation curable coating compositions, the cellulose ester in the composition of this invention need not be modified to contain ethylenic unsaturation to attain the desirable combination of physical workability of the uncured coating and solvent resistance of the cured coating. These properties are obtained by blending the unmodified cellulose ester with an acrylic or methacrylic ester having more than two (meth)acrylate groups.

The cellulose ester resins suitable for use in the composition of this invention can be inorganic esters such as nitrocellulose or organic esters such as cellulose acetate butyrate and cellulose acetate propionate. The molecular weight of such resins can vary within a broad range. However, it should be such that the coating composition has the viscosity desired for the intended method of application. Any grade of cellulose ester can be used. Nitrocellulose designated as 1/4 sec RS grade (Hercules incorporated) is preferred.

The (meth)acrylic esters having more than two (meth)acrylate groups include, for example, polyurethane-poly(meth)acrylates, polyester-poly(meth)acrylates, polyether-poly(meth)acrylates and epoxy-substituted poly(meth)acrylates. These esters can be monomers, oligomers or higher molecular weight polymers. The preferred molecular weight (number average) is in the range of 100 to 5000. Suitable (meth)-acrylic esters include, for example, a polyurethane-methacrylate resin prepared from hydroxyethyl methacrylate and an aliphatic polyisocyanate, dipentaerythritol pentaacrylate and trishydroxyethyl isocyanurate triacrylate. The (meth)acrylic ester can be present as a single component or as a mixture of (meth)acrylic esters, but at least one of the components should have more than two (meth)acrylate groups.

The coating composition contains 30% to 70% of the cellulose ester and 70% to 30% of the acrylic or methacrylic ester having more than two (meth)acrylate groups, based on the weight of solids. A ratio of 40/60 - 60/40 cellulose ester/(meth)acrylate is preferred for application to a nonoleophilic surface, e.g., in the manufacture of kitchen cabinets and low cost furniture. For application to an oleophilic surface, a ratio of 50/50 is preferred. If a higher percentage of cellulose ester is used, post-cure solvent resistance is sacrificed while the use of higher amounts of photocurable resin results in the sacrifice of pre-cure lacquer properties.

The composition contains 0.1 to 10%, based on the weight of solids, of a suitable photoinitiator. Any of a wide variety of commercially available photoinitiators can be used for this purpose, e.g., benzophenone photoinitiators and benzophenone/amine blends.

The composition also contains a sufficient amount of a free radical scavenger to prevent gelling during storage. Any commercially available free radical scavenger can be used, including quinone compounds such as methylhydroquinone and phenolic compounds such as 2,6-ditert. butyl-4-methylphenol. The amount used depends upon the reactivity of the radiation-curable component and the length of time the composition will be stored. Larger amounts are generally required when acrylates rather than methacrylates are used as the radiation-curable component.

Sufficient solvent is used to apply the composition by the coating method selected. The solvent used is one that is suitable for the cellulose ester. Active solvents such as ketones and esters, as well as blends of active solvents with latent solvents and diluents can be used. Methyl ethyl ketone and butyl acetate are preferred.

The nonvolatile and solvent content of the coating compositions will depend upon several factors including the method of application and the curing schedule. For spray coating applications, the solids content is generally 15-25 weight %, based on the total weight of the composition. The compositions can also be applied by roll coating and precision roll coating.

After the coating composition is applied to a substrate the solvent is allowed to evaporate as in the application of conventional lacquer coatings. Although the preferred substrate is wood, the coating compositions of this invention can also be applied to other substrates such as metals, ceramics, and plastics that are not adversely affected by the solvent in the coating composition. The substrate is then worked on as desired, e.g., sanded, rubbed and polished, and the coating is cured by exposing to ultraviolet radiation.

When it is desired to apply the coating compositions of this invention in a furniture finishing schedule that contains low surface tension color coats such as stains, fillers and glazes, a low surface tension radiation-curable resin is preferred. The low surface tension resins are prepared by reacting a small mole fraction of an aliphatic or aromatic polyisocyanate with an alkyl alcohol, acid or amine having at least 8 carbon atoms, followed by reacting the remainder of the isocyanate groups with a hydroxyalkyl (meth)-acrylate, preferably 2-hydroxyethyl methacrylate (HEMA). The reaction is typically carried out in the presence of a urethane catalyst such as dibutyltin dilaurate.

The type of polyisocyanate selected will depend on the use for which the coating is intended. If a nonyellowing coating is desired, an aliphatic isocyanate is preferred.

3

Suitable alkyl alcohols, amines and acids include, for example, octanol; tetradecanol; octadecanol; PRIMAROL 1511, a 24-28 carbon atom branched alcohol supplied by Henkel Corporation; isocetyl alcohol; oleyl amine; ZONYL FSO-100, an ethoxylated fluoro alcohol supplied by Du Pont; hydroabietyl alcohol; and PAMOLYN® 300 fatty acid supplied by Hercules Incorporated. The mole fraction of the isocyanate groups that should be reacted with the alkyl alcohol, acid or amine varies depending on the length of the alkyl moiety to be appended 'to the radiation-curable molecule. The longer the chain length of the alcohol, acid or amine, the smaller the mole fraction of isocyanate groups that must be reacted to achieve resins for use in nongreying coatings. Alkyl amines and alcohols can be used interchangeably. However, modification with alcohols is preferable because it yields resins with broader solubility ranges and lower solution viscosity. The use of alkyl acids to modify radiation-curable resins requires more rigorous synthetic conditions such as higher temperatures and a larger amount of catalyst.

It is the alkyl modification that lowers the surface tension of the resins, thereby facilitating better wetting of the oleophilic substrate. There is a concomitant increase in intercoat adhesion and a concomitant decrease in coating aberrations such as greying or whitening during temperature cycling tests. Surface tension typically decreases with increasing weight % of alkyl modification (same alkyl group) and decreases as alcohol chain length increases.

Alkyl modifying agents having at least 8 carbon atoms are preferred. Below that chain length, too large a mole fraction of -NCO groups is consumed if the critical minimum weight percent of alkyl modification is met or exceeded. Too little isocyanate will remain for reaction with the hydroxyalkyl (meth)acrylate and in effect, there will not be enough radiation-curable groups per molecule to yield durable coatings after cure. The following compositional ranges are acceptable for coating compositions that are to be applied to an oleophilic surface by spray coating:

| Alkyl-Modified Radiation-Curable Resin | |
|---|---|
| Material | Weight % (dry resin basis) |
| Polyisocyanate | 44.2 - 58.4 |
| Alkyl alcohol, acid or amine | 6.9 - 35.5 |
| Hydroxyalkyl (meth)acrylate | 23.2 - 34.7 |

| Coating Solids | |
|---|---|
| Material | Weight % |
| Cellulose ester | 30 - 70 |
| Alkyl-modified radiation-curable resin | 70 - 30 |

| Coating Composition (for application) | |
|---|---|
| Material | Amount* |
| Coating solids | 10 - 30 wt. % |
| Organic solvent | 70 - 90 wt. % |
| Photoinitiator | 1 - 10 wt. % |
| Free radical scavenger | 100 - 500 ppm |

* All amounts are based on the total weight of the composition except the photoinitiator, which is based on solids.

In the evaluation of the coatings described in Examples 1-28, a wood panel is prepared and spray coated with the desired coating composition. The coating, before curing, is rubbed, polished, and evaluated for print resistance. After curing with UV light, the coating is evaluated for early print resistance, solvent resistance and adhesion. These procedures are described in more detail below.

Wood panels (6" x 12" (15.2 x 30.5 cm), maple veneer) are sanded to a smooth surface using 150-C sandpaper and wiped clean with a paper towel. A steel plate (4" x 6") (10.2 x 15.2 cm) treated with BONDERITE® to promote adhesion (Parker Chemical Company) is attached to each panel for measuring the film thickness. The viscosity of the coating solution is adjusted to 20 seconds for a #4 Ford cup. A coat is applied, solvent is allowed to evaporate at room temperature (RT) for 10 minutes, and the coating is baked for 10 minutes at 120° F (49° C) and then cooled for 10 minutes at room temperature.

The coating is lightly sanded with No. 280 stearated paper and wiped clean with a tack rag. The sandability is noted by judging the ease of sanding and any loading on the sandpaper. Two additional coats are applied following the above cycle: evaporate solvent/10 minutes, bake at 120° F (49° C)/10 minutes and cool at RT/10 minutes. The panels are then allowed to air dry overnight. The thickness of the dry coating on the BONDERITE® plate is measured. The wooden panels are then sanded with a rubbing oil (80% mineral oil, 20% refined oil) using 600-A sandpaper and the sandability is rated 0 to 5 (5 - no loading, white powder; 4 - slight gum, white powder; 3-slight gum; 2 - moderate gum; 1 - heavy gum; 0 - cannot be rubbed).

The panels are then polished with rubbing compound until glossy. The gloss is also rated on a scale of 0 to 5 (5 -highly glossy, 0 - dull). The panels are cured using an Argus 7125 UV processor, 2 passes at 20 feet (6 m) per minute.

Print resistance is measured at 2 psi (.14 kg/cm$^2$)/2 hours and the nature of the print (complete or incomplete, light, moderate, or heavy) is noted. The print is rated on a scale of 0 to 5 (5 - no print; 4 - negligible (light, incomplete); 3 - light complete; 2 - moderate; 1 - heavy; 0 -heavy with cloth sticking.

Within 2-4 hours after curing, the panel is subjected to the 4 psi (.28 kg/cm$^2$)/24 hour print test. The print is rated as described above for the uncured coating.

The MEX spot test is performed as follows. A cotton ball is soaked with methyl ethyl ketone (milk) and placed on the coated surface. The soaked cotton is covered with a watch glass. The coating is observed after two hours. The MEK resistance is rated on a scale of 0 to 5 (5 - no attack; 4 - no attack, slight dull or ring formation; 3 - no attack but becomes dull; 2 - very slight attack, formation of spots; 1 - slight attack; 0 - complete attack or disintegration of coating.

The acetone spot test is performed in the same manner as the MEK spot test, except that acetone is used instead of methyl ethyl ketone. The cross-cut adhesion test is carried out according to ASTM D-3359.

Example 1

A fully methacrylated multifunctional polyurethane methacrylate designated as PUMA in the following tables is prepared as follows. A mixture of DESMODUR N-100 aliphatic polyisocyanate (114.6 g) supplied by Mobay Chemical Corporation, butyl acetate (114.6 g) and dibutyltin dilaurate (0.5 g) is placed in a 1 liter three neck flask and maintained under agitation. A premix of 2-hydroxyethyl methacrylate (78.0 g), butyl acetate (78.0 g), methylhydroquinone (0.1 g) and 216-ditert. butyl-4-methylphenol (0.1 g) is added dropwise while maintaining the reaction temperature below 32° C. The solution is agitated at room temperature overnight. IR analysis showed the NCO peak to be nonexistent.

Examples 2-15

Coating compositions prepared from blends of nitrocellulose and various multifunctional (meth)acrylates are described in Table 1. All of the commercially available multifunctional (meth)acrylates contain a free radical scavenger. The sandability and print resistance of the uncured coatings are evaluated, as well as the print resistance, acetone spotting, methyl ethyl ketone spotting and adhesion of the cured coatings. The results of the tests are given in Table 2.

Examples 16-28

Coating compositions prepared from blends of cellulose acetate propionate or cellulose acetate butyrate and various multifunctional (meth)acrylates are described in Table 3. All of the commercially available multifunctional (meth)acrylates contain a free radical scavenger. The sandability and print resistance of the uncured coatings are evaluated, as well as the print resistance, acetone spotting, methyl ethyl ketone spotting and adhesion of the cured coatings. The test results are given in Table 4.

TABLE I

| EXAMPLE [1] | NITROCELLULOSE [2] WT.% | (METH)ACRYLATES [3] | FUNCTIONALITY [4] | WT % |
|---|---|---|---|---|
| 2 | 80 | PUMA | 3 | 20 |
| 3 | 60 | PUMA | 3 | 40 |
| 4 | 50 | PUMA | 3 | 50 |
| 5 | 50 | DPPA | 5 | 50 |
| 6 | 50 | DPPA/C9503 | 5/2 | 25/25 |
| 7 | 50 | PUMA/C9503 | 3/2 | 40/10 |
| 8 | 50 | DPPA/PUMA/SR604 | 5/3/1 | 20/25/5 |
| 9 | 50 | UV893 | 2 | 50 |
| 10 | 40 | PUMA | 3 | 60 |
| 11 | 40 | PUMA/DPPA | 3/5 | 30/30 |
| 12 | 40 | PUMA/THEIC | 3/3 | 30/30 |
| 13 | 40 | UV893/PUMA/THEIC | 2/3/3 | 20/20/20 |
| 14 | 40 | PUMA/DPPA/C9008 | 3/5/3 | 30/20/10 |
| 15 | 35 | PUMA/DPPA/C9008 | 3/5/3 | 25/20/20 |

(1) All formulations contain 5% dimethoxyphenylacetophenone photoinitiator.

(2) Nitrocellulose - RS 1/4 sec (Hercules Incorporated)

(3) PUMA - DESMODUR N100 - hydroxyethyl methacrylate adduct (Example 1)

DPPA - Dipentaerythritol pentaacrylate (Sartomer)

C9503 - CHEMLINK 9503 (Sartomer)

SR604 - Polypropylene glycol monomethacrylate (Sartomer)

UV893 - UVITHANE 893 (Morton Thiokol)

THEIC - Trishydroxyethyl isocyanurate triacrylate (Sartomer)

C9008 - CHEMLINK 9008 alkoxylated triacrylate (Sartomer)

(4) No. of meth(acrylate) groups per molecule.

TABLE 2

| EXAMPLE | UNCURED COATING | | CURED COATING | | | |
|---|---|---|---|---|---|---|
| | SANDABILITY | PRINT RESISTANCE | PRINT RESISTANCE | ACETONE SPOT TEST | MEK SPOT TEST | ADHESION |
| 2 | 5 | 4-5 | 5 | - | 0 | - |
| 3 | 5 | 4-5 | 5 | - | 1-2 | 1 |
| 4 | 4-5 | 3 | 5 | 0 | 5 | 1 |
| 5 | 5 | 3-4 | 5 | - | 5 | 3-4 |
| 6 | 5 | - | 5 | - | 5 | 1 |
| 7 | 4 | 1-2 | 5 | 1 | - | 1 |
| 8 | 5 | - | 5 | - | 5 | 3-4 |
| 9 | 3 | 1 | 5 | 0 | 0 | 5 |
| 10 | 3-4 | 1 | 5 | 4-5 | 5 | 0 |
| 11 | 4-5 | 1 | 5 | 5 | 5 | 2-3 |
| 12 | 3-4 | 2 | 5 | 5 | 5 | 1-2 |
| 13 | 3-4 | 3 | 5 | 1 | - | 0 |
| 14 | 3-4 | - | 5 | - | 5 | 0-1 |
| 15 | 3 | 1-2 | 5 | 5 | - | 2 |

TABLE 3

| EXAMPLE [1] | CELLULOSE ESTER [2], WT. % | (METH)ACRYLATES [3] | FUNCTIONALITY [4] | WT % |
|---|---|---|---|---|
| 16 | CAP, 80 | PUMA | 3 | 20 |
| 17 | CAP, 60 | PUMA | 3 | 40 |
| 18 | CAP, 50 | UV893 | 2 | 50 |
| 19 | CAP, 50 | DPPA | 5 | 50 |
| 20 | CAP, 40 | PUMA | 3 | 60 |
| 21[5] | CAP, 40 | PUMA | 3 | 60 |
| 22 | CAP, 40 | DPPA | 5 | 60 |
| 23 | CAP, 40 | PUMA/DPPA | 3/5 | 30/30 |
| 24 | CAB, 80 | PUMA | 3 | 20 |
| 25 | CAB, 60 | PUMA | 3 | 40 |
| 26 | CAB, 50 | UV893 | 2 | 50 |
| 27 | CAB, 40 | PUMA | 3 | 60 |
| 28 | CAB, 40 | DPPA | 5 | 60 |

(1) All coating compositions contain 5% dimethoxyphenylacetophenone photoinitiator.

(2) CAP - Cellulose acetate propionate CAP 504-0.2 (Eastman Kodak)

CAB - Cellulose acetate butyrate CAB 553-0.4 (Eastman Kodak)

(3) PUMA - DESMODUR N100 - hydroxyethyl methacrylate adduct (Example 1)

DPPA - Dipentaerythritol pentaacrylate (Sartomer)

UV893 - UVITHANE 893 (Morton Thiokol)

(4) No. of (meth)acrylate groups per molecule.

(5) An acid catalyzed sealer is applied to the wood panel prior to the coating composition.

TABLE 4

| EXAMPLE | UNCURED COATING | | CURED COATING | | | |
|---|---|---|---|---|---|---|
| | SANDABILITY | PRINT RESISTANCE | PRINT RESISTANCE | ACETONE SPOT TEST | MEK SPOT TEST | ADHESION |
| 16 | 5 | 5 | 5 | 0 | 0 | 4-5 |
| 17 | 5 | 5 | 5 | 0 | 4-5 | 0 |
| 18 | 5 | 5 | 5 | 0 | 0 | 4-5 |
| 19 | 3-4 | 5 | 5 | 5 | 5 | 1-2 |
| 20 | 3-4 | 5 | 5 | 5 | 5 | 0 |
| 21 | 4-5 | 3-4 | 5 | 4-5 | 5 | 5 |
| 22 | 2 | 4 | 5 | 5 | 5 | 3-4 |
| 23 | 2 | 4 | 5 | 5 | 5 | 5 |
| 24 | 5 | 5 | 5 | 0 | 0 | 5 |
| 25 | 3-4 | 4-5 | 5 | 4-5 | 5 | 0 |
| 26 | 3-4 | 4-5 | 5 | 0 | 0 | 5 |
| 27 | 2-3 | 4-5 | 5 | 4-5 | 5 | 0 |
| 28 | 2 | 4 | 5 | 5 | 5 | 3-4 |

Example 29

A radiation-curable coating composition for oleophilic surfaces is prepared as follows. A mixture of DESMODUR N-100 aliphatic polyisocyanate (400 g) supplied by Mobay Chemical Corporation, 500 g butyl acetate, 0.4 g dibutyltin dilaurate and 0.4 g ditert. butyl-4-methylphenol as a free radical scavenger is stirred in a four neck, two liter breakaway resin kettle with a paddle type stirrer and a dry air purge. Octanol (57.42 g) is added slowly and the reaction mixture is heated for one hour at 60° C. 2-Hydroxyethyl methacrylate (210.73 g) is added slowly over the course of one hour. The mixture is maintained at 60° C for four hours and is cooled to room temperature. Absolute ethanol (25 g) is added and the resin solution is stirred for 15 minutes.

The resin solution is blended with enough of a 30 weight % butyl acetate solution of 1/2 sec RS nitrocellulose (Hercules Incorporated), to yield a final solution that is a 50/50 nitrocellulose/octanol-modified polyurethane methacrylate blend on a dry resin weight basis. The final solution solids are approximately 40%. Portions of this solution are diluted with appropriate solvents to constitute the washcoat, sealer and topcoats for use in the finishing schedule described below that includes the use of oleophilic color coats. Before application of the coating, enough IRGACURE 184 photoinitiator (Ciba Geigy) is added to yield washcoat, sealer, and topcoat solutions containing 4 wt. % photoinitiator based on resin solids.

Wood panels (6" x 12" (15.2 x 30.5 cm), red oak veneer) are sanded to a smooth surface using 150-C sandpaper. An alcohol-soluble dye stain is reduced with lacquer thinner and a light wet coat is applied by spraying. Solvent is allowed to evaporate at room temperature for 10 minutes. The photocurable resin blend prepared as described above, reduced to 7% solids with solvent, is spray applied as the washcoat. Solvent is allowed to evaporate for 12 minutes. Panels are scuff sanded with No. 320 stearated sandpaper. An oleophilic filler is applied by brush and is worked into the wood by hand using cheesecloth. Solvent is allowed to evaporate for 15 minutes at room temperature and for 20 minutes at 135° F (57.2° C). The panel is allowed to cool before a sealer (same as washcoat but at 10% solids) is spray applied as a wet coat. The solvent is allowed to evaporate for 10 minutes at room temperature and the panel is scuff sanded. Three topcoats are applied (cellulose ester/photocurable resin blends, wt. % solids), followed by a 20 minute evaporation time between coats. The panels are allowed to dry overnight and are cured using UV light (Argus 7125 UV Processor, 2 passes at 20 ft (6 m)/min). The panels are allowed to stand for 3 days before cold temperature cycling tests are begun.

Temperature cycling experiments are conducted one of two ways: either the ASTM method (designation D1211 - 87), "Standard Test Method for Temperature Change-Resistance of Clear Nitrocellulose Lacquer Films Applied to Wood" is followed or a longer cycle test method with no recovery time is conducted. In the ASTM method, panels are subjected first to a high temperature (120°F, 49°C) for one hour, followed by exposure to a low temperature (-5°F, -20.6°C) for one hour, and then returned to room temperature (15 minutes). This constitutes one cycle. Panels in this study are subjected to no less than 20 cycles unless they fail prior to completion of the 20 cycles. In the test method alternate to the ASTM method, panels are heated for 8 hours at 150°F (65.6°C) followed by eight hours at -5°F (-20.6°C). This constitutes one cycle and the recovery time (return to room temperature between cycles) is only as long as it takes to evaluate panels, usually less than 4 minutes. All panels in both tests are evaluated after the completion of every cycle. The longer period test is considered to be more severe than the ASTM test and all panels that pass the ASTM test are subsequently subjected to the longer period test.

After 20 ASTM cycles and four long period cycles, panels coated with the low surface energy photocurable resin composition prepared as described above exhibit no haze, greying (whitening over heavily filled areas) or checking (a cracking of the coating during temperature cycling), which are indicative of loss of adhesion. A coating prepared, applied and tested in the same fashion, but made with a radiation-curable resin that is completely reacted with hydroxyethyl methacrylate (no octanol modification), whitened in two ASTM cold check cycles.


## Claims

1. An acrylate or methacrylate-based radiationcurable coating composition containing a photoinitiator is characterized in that it comprises a blend of (1) 30 to 70% of a cellulose ester, (2) 70 to 30% by weight of at least one acrylic or methacrylic ester having more than two (meth)acrylate groups, and (3) 0.1% to 10% of a photoinitiator, all percentages being based on the weight of solids.

2. The composition as claimed in claim 1, further characterized in that the acrylic or methacrylic ester having more than two (meth)acrylate groups is a polyurethane (meth)acrylate resin that is the reaction product of (a) a hydroxyalkyl (meth)acrylate and (b) the reaction product of a polyisocyanate and an alkyl amine, acid or alcohol having at least 8 carbon atoms.

3. The composition as claimed in claim 2, further characterized in that the ratio of cellulose ester to (meth)-acrylic ester is 50/50, based on the weight of solids.

4. The composition as claimed in any of the preceding claims, further characterized in that the cellulose ester is nitrocellulose.

5. The composition as claimed in claims 2-4, further characterized in that the polyurethane (meth)acrylate resin is the reaction product of an aliphatic polyisocyanate, isocetyl alcohol and 2-hydroxyethyl methacrylate.

6. Use of the composition as claimed in any of the preceding claims to coat wood.

7. Use of the composition as claimed in claims 2-5 to coat an oleophilic substrate.

European
Patent Office

**EUROPEAN SEARCH
REPORT**

Application Number

**EP 90 12 0736**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | WPIL, FILE SUPPLIER, accession no. 86-024305 [04], Derwent Publications Ltd, London, GB;<br>& JP-A-60 245 610 (TOYOBO K.K.) 05-12-1985<br>* Whole abstract * | 1,4 | C 09 D<br>101/10<br>C 09 D 101/18<br>C 09 D 4/06 |
| Y | IDEM | 1,2,4,5,7 | |
| Y | GB-A-1 515 292 (CRODA INTERNATIONAL LTD)<br>* Page 1, lines 61-69,78-85; page 2, lines 24-44,94-97; page 3, lines 22-27; example 2; claims 1,2 * | 1,2,4,5,7 | |
| A | WPIL, FILE SUPPLIER, accession no. 86-322303 [49], Derwent Publications Ltd, London, GB;<br>& JP-A-61 238 869 (KANSAI PAINT K.K.) 24-10-1986<br>* Whole abstract * | 1 | |
| A | EP-A-0 126 359 (BAYER AG)<br>* Page 3, lines 1-12; page 14, lines 7-30; page 16, lines 6-11; page 22, example 1 * | 1,2 | |

| | TECHNICAL FIELDS SEARCHED (Int. Cl.5) |
|---|---|
| | C 09 D<br>C 08 L |

The present search report has been drawn up for all claims

| Place of search | Date of completion of search | Examiner |
|---|---|---|
| The Hague | 31 January 91 | MAZET J.-F. |